# EUROPEAN PATENT SPECIFICATION

(11) **EP 3 742 902 B1**
(45) Date of publication and mention of the grant of the patent: **10.07.2024**
(21) Application number: 19700939.2
(22) Date of filing: 21.01.2019
(51) Int. Cl.: A23D 9/05, A23D 9/007, A23L 23/10, A23D 9/02, A23G 1/40

(54) **MANUFACTURING PROCESS FOR THE PRODUCTION OF A POWDER FROM FAT AND FIBER**
VERFAHREN ZUR HERSTELLUNG EINES PULVERS AUS FETT UND FASERN
PROCÉDÉ DE FABRICATION POUR LA PRODUCTION D'UNE POUDRE DE GRAISSE ET DE FIBRES

(30) Priority: 23.01.2018 EP 18152898
(43) Date of publication of application: 02.12.2020
(73) Proprietor: Société des Produits Nestlé S.A., 1800 Vevey (CH)
(72) Inventor: GADDIPATI, Sanyasi, Beachwood, OH 44122 (US); PERDANA, Jimmy, 78224 Singen (Hohentwiel) (DE); KIM, Youngbin, 78224 Singen (DE); SCHROEDER, Volker, 88633 Heiligenberg (DE); FERNANDEZ FARRES, Isabel, 1012 Lausanne (CH); GUNES, Zeynel Deniz, 1000 Lausanne 27 (CH)
(74) Representative: Dinger, Hansjörg
(86) International application number: PCT/EP2019/051316
(87) International publication number: WO 2019/145241

(56) References cited:
- JP-A- 2002 012 886
- JP-A- 2015 209 519
- JP-A- H08 134 493
- US-A- 6 132 793
- US-A1- 2014 141 147
- US-A1- 2015 164 099

## Description

### TECHNICAL FIELD

The invention relates to a manufacturing process for the production of a fat-fiber powder. In particularly the invention relates to a process for the production of a fat-fiber powder having up to 93% of a fat (by weight of total fat-fiber powder) and at least 7% of a vegetable fiber (by weight of total fat-fiber powder), wherein the fiber is characterized by having a rate of hydration between 15 to 500 cP/min and wherein the fat has a solid fat content (SFC) at 20°C at least of 12.1 wt% (by weight of total fat).

### BACKGROUND

Fats are often added in foods to provide nutrition, taste/aroma, texture, specific processing role, and/or to drive consumers liking. Fat powders are available and have been widely used in food products as confectionary products or culinary products as soups, bouillon powders or bouillon tablets/cubes. By nature, fat powders are temperature-sensitive and therefore exposure to a mild elevation of temperatures (e.g. 25°C to 40°C) can be detrimental causing powders to lump which subsequently impairs mixing and/or tableting process. Solutions relate to stringent delivery and storage condition of fat powders (always kept in temperature controlled condition). Major cost impact is one drawback. Ensuring strict supply chain conditions is another issues that often cannot be easily solved. Another limitation to produce a fat powder is related that a minimum crystallinity characteristic of fat is required. Solid fat content (SFC) at 30°C of at least 45 wt% (by weight of total fat) is usually advised. This limits the selection of fats to powderise. High SFC fats are usually having low amounts of unsaturated fatty acids. Unsaturated fatty acids are usually positively perceived by consumers. Therefore there is a need to increase the load of unsaturated fatty acid in the fat powders for its application.

Powdered fat or oil compositions comprising fiber material are known from e.g., JPH 08134493 A and JP 2002/012886 A1.

Hence, it was the object of the present invention to provide the art with a manufacturing process for the production of a solid fat-fiber powder. This solid fat-fiber powder is suitable to use for the preparation of a food product.

### SUMMARY OF THE INVENTION

The object of the present invention is to improve the state of the art or at least provide manufacturing process for the production of alternative for a fat-fiber powder (powdered fat) having a solid fat content (SFC) at 20°C of at least 12.1 wt% (by weight of total fat):
i) the powdered fat-fiber has a good flow-ability with flow-ability index (FFC) above 1.8 at 23°C;
ii) the powdered fat-fiber has a good flow-ability with flow-ability index (FFC) above 1.8 after exposure to 42°C for 12 hours;
iii) Preferably no added emulsifier or added protein needed;
iv) The powdered fat-fiber keeps a powdered structure even at high temperature e.g. up to 130°C;
v) good flow-ability of a bouillon powder using a powdered fat-fiber of the invention (FFC above 2.5 at 23°C);
vi) improve dosing accuracy;
vii) better distribution of the powdered fat-fiber of the invention during mixing with other ingredients;
viii) avoid lumps and stickiness during mixing with other ingredients;
ix) no lump by same mixing parameters with other ingredients (batch size, speed and time);

The object of the present invention is achieved by the subject matter of the independent claims. The dependent claims further develop the idea of the present invention. Accordingly, the present invention provides in a first aspect a process for the production of a fat-fiber powder comprising up to 93wt% of a fat (by weight of total fat-fiber powder) and at least 7wt% of a fiber (by weight of total fat-fiber powder), the process comprising the steps of:
a) Melting fat;
b) Mixing fiber, melted fat, and water at a weight ratio of fiber to water between 1:2.5 and 1:30;
c) Drying the mixture of step b);
d) Optionally milling the fat-fiber powder after the drying step c);

wherein the fiber is characterized by having a rate of hydration between 15 to 500 cP/min and
wherein the fat has a solid fat content (SFC) at 20°C of at least 12.1 wt% (by weight of total fat). Said rate of hydration is determined according to the method provided in example 1.

In a second aspect which is not part of the present invention, there is disclosed a product obtainable by process for the production of a fat-fiber powder having up to 93 wt% of a fat (by weight of total fat-fiber powder) and at least 7% of a fiber (by weight of total fat-fiber powder) comprising the steps of:
a) Melting fat;
b) Mixing fiber, melted fat, and water at a weight ratio of fiber to water between 1:2.5 and 1:30;
c) Drying the mixture of step b);
d) Optionally milling the fat-fiber powder after the drying step c);

wherein the fiber is characterized by having a rate of hydration between 15 to 500 cP/min and
wherein the fat has a solid fat content (SFC) at 20°C of at least 12.1 wt% (by weight of total fat).

Another aspect not part of the invention relates to a food product prepared by making use of the fat-fiber powder of the invention. Such food product can be a confectionary product or a culinary food product e.g. a dough, a soup, bouillon powder or hard bouillon tablet/cube.

It has been surprisingly found by the inventors that by the process of the invention a fat-fiber powder comprising up to 93% of a fat (by weight of total fat-fiber powder) and at least 7% of fiber (by weight of total fat-fiber powder), wherein the fiber is characterized by having a rate of hydration between 15 to 500 cP/min, can be obtained which can now solve the requirement to achieve the necessary attributes:
- the powdered fat-fiber of the invention has good flow-ability (FFC above 1.8 at 23°C or above 1.8 after exposure at 42°C for 12 hours);
- preferably no added emulsifier or added protein or combinations thereof needed;
- keeps a powdered structure even at high temperature e.g. up to 120°C;
- improved dosing properties and no caking;
- a bouillon powder having a good flow-ability (FFC above 2.5 at 23°C);
- no lumping by mixing with other ingredients;
- no additional added anti-caking agents are needed to reach a good flow-ability.

### DETAILED DESCRIPTION

The present invention pertains to a process for the production of a fat-fiber powder comprising up to 93wt% of a fat (by weight of total fat-fiber powder) and at least 7wt% of a fiber (by weight of total fat-fiber powder), the process comprising the steps of:
a) Melting fat;
b) Mixing fiber, melted fat, and water at a weight ratio of fiber to water between 1:2.5 and 1:30;
c) Drying the mixture of step b);
d) Optionally milling the fat-fiber powder after the drying step c);

wherein the fiber is characterized by having a rate of hydration between 15 to 500 cP/min and
wherein the fat has a solid fat content (SFC) at 20°C of at least 12.1 wt% (by weight of total fat). Said rate of hydration is determined according to the method disclosed in example 1.

In an embodiment the invention pertains to a process for the production of a fat-fiber powder comprising between 40 to 93 wt% of fat (by weight of total fat-fiber powder) and 7 to 60 wt% of a fiber (by weight of total fat-fiber powder), the process comprising the steps of:
a) Melting fat;
b) Mixing fiber, melted fat, and water at a weight ratio of fiber to water between 1:2.5 and 1:30;
c) Drying the mixture of step b);
d) Optionally milling the fat-fiber powder after the drying step b);

wherein the fiber is characterized by having a rate of hydration between 15 to 500 cP/min and
wherein the fat has a solid fat content (SFC) at 20°C of at least 12.1 wt% (by weight of total fat).

In a preferred embodiment the present invention pertains to a process for the production of a fat-fiber powder comprising between 75 to 93 wt% of fat (by weight of total fat-fiber powder) and 7 to 25 wt% of a fiber (by weight of total fat-fiber powder), wherein the fiber is characterized by having a rate of hydration between 15 to 500 cP/min and wherein the fat has a solid fat content (SFC) at 20°C of at least 12.1 wt% (by weight of total fat).

"Fat-fiber powder" according to this invention has particle size distribution with a median diameter Dv50 in the range of 15 to 5000 µm, preferably in the range of 20 to 5000 µm, preferably in the range of 30 to 3000 µm, preferably in the range of 30 to 1500 µm, preferably in the range of 40 to 1500 µm, preferably in the range of 40 to 1000 µm, preferably in the range of 50 to 1000 µm, preferably in the range of 80 to 1000 µm, preferably in the range of 80 to 700 µm, preferably in the range of 100 to 700 µm, preferably in the range of 150 to 700 µm, preferably in the range of 150 to 500 µm. In a further embodiment "fat-fiber powder" according to this invention has a water activity below 0.50, preferably below 0.40, preferably below 0.35, more preferably below 0.30, more preferably below 0.25, more preferably below 0.20, more preferably between 0.01 and 0.40.

The particle size Dv50 is used in the conventional sense as the median of the particle size distribution. Median values are defined as the value where half of the population reside above this point, and half resides below this point. The Dv50 is the size in micrometer that splits the volume distribution with half above and half below this diameter. The particle size distribution may be measured by laser light scattering, microscopy or microscopy combined with image analysis. For example, the particle size distribution may be measured by laser light scattering. Since the primary result from laser diffraction is a volume distribution, the Dv50 cited is the volume median.

"Fat" of the present invention has a solid fat content (SFC) at 20°C of at least 12.1 wt% (by weight of total fat), preferably has a solid fat content (SFC) at 20°C between 12.1 to 90 wt%, preferably has a solid fat content (SFC) at 20°C between 15 to 85 wt%, preferably has a solid fat content (SFC) at 20°C between 20 to 85 wt%, preferably has a solid fat content (SFC) at 20°C between 20 to 80 wt%, preferably has a solid fat content (SFC) at 20°C between 20 to 75 wt%, preferably has a solid fat content (SFC) at 20°C between 25 to 75 wt%, preferably has a solid fat content (SFC) at 20°C between 30 to 75 wt%, preferably has a solid fat content (SFC) at 20°C between 40 to 75 wt%. Fat is solid at a temperature of 20°C, preferably at a temperature of 25°C. Sunflower oil has a solid fat content (SFC) at 20°C of 0. Olive oil has a solid fat content (SFC) at 20°C of 0. Chicken fat has a solid fat content (SFC) at 20°C of 3.7. The solid fat content shows that according to the invention oils are excluded as they are liquid at a temperature of 25°C, preferably at room temperature of 20°C.

In a preferred embodiment the fat is selected from the group consisting of palm oil, palm stearin, hydrogenated palm oil, interesterified palm oil, coconut oil, cocoa butter, shea butter, fractionated shea butter, sal fat, illipe butter, mango (kernel) oil, kokum butter, beef fat (tallow), fractionated beef fat, pork fat (lard), butter, milk fat, single and double fractionated chicken fat or combination thereof. The present invention does not include palm olein.

In a further embodiment, the fat-fiber powder comprises fat in an amount in the range of 40 to 93% (by weight of the fat-fiber powder), preferably between 45 to 93%, preferably between 50 to 93%, preferably 55 to 93%, preferably 60 to 93%, preferably 70 to 93%, preferably 75 to 93%, preferably 80 to 93%, preferably 85 to 93%, preferably 70 to 90%, preferably 75 to 90%, preferably 75 to 85% (by weight of the fat-fiber powder). The fat is melted before mixing the fiber at temperatures between 50 and 100°C; preferably between 50 and 90°C; preferably between 60 and 90°C; more preferably between 60 and 85°C.

"Fiber" according to this invention is characterized by having a rate of hydration between 15 to 500 cP/min, preferably 25 to 400 cP/min, preferably 50 to 350 cP/min. The cP/min can be recalculated to cP/sec and 1 cP = 10⁻³ Pa·s. In a preferred embodiment fiber having a rate of hydration between 0.250 to 8.333 cP/sec, preferably 0.417 to 6.666 cP/sec, preferably 0.833 to 5.833 cP/sec.

"Rate of hydration" according to this invention is defined as the time required for the fiber to interact with water and swell resulting an increase in viscosity.

In a preferred embodiment fiber is a water insoluble dietary fiber, preferably a water insoluble vegetable dietary fiber. It is selected from at least one of carrot, beetroot, pumpkin or combinations thereof.

Fiber has particle size with median diameter Dv50 in the range of 5 to 400 µm, preferably in the range of 10 to 400 µm, preferably in the range of 15 to 400 µm, preferably in the range of 20 to 400 µm, preferably 25 to 375 µm, preferably 30 to 350 µm; preferably 35 to 300 µm.

In a further embodiment, the fat-fiber powder comprises fiber in an amount in the range of 7 to 60% (by weight of the fat-fiber powder), preferably between 7 to 55%, preferably between 7 to 50%, preferably 7 to 45%, preferably 7 to 40%, preferably 7 to 30%, preferably 7 to 25%, preferably 7 to 20%, preferably 7 to 15%, preferably 10 to 30%; preferably 10 to 25%, preferably 15 to 25% (by weight of the fat-fiber powder).

In an embodiment water is added at a weight ratio of fiber to water between 1:2.5 and 1:35, preferably between 1:3 and 1:30, preferably between 1:3.5 and 1:30, preferably between 1:3.5 and 1:25, preferably between 1:3.5 and 1:20. In an embodiment the added water has a temperature between 40 and 100°C, preferably between 50 and 100°C, preferably between 50 and 90°C, more preferably between 60 and 90°C.

"Dietary fiber" consists of the remnants of the edible plant cell, polysaccharides, lignin, and associated substances resistant to digestion (hydrolysis) by human alimentary enzymes.

In a preferred embodiment, the fat-fiber powder of the present invention does not include any emulsifier, added proteins or combinations thereof. The term "emulsifier" is selected from the group consisting of egg yolk, lecithin, mustard, soy lecithin, sodium phospates, sodium stearoyl lactylate, diacetyl tartaric ester of monoglyceride (DATEM), polyglycerol-polyricinoleate (PGPR), monoglyceride and mono-diglyceride or a combination thereof. The term "protein" is selected from the group consisting of milk and/or whey proteins, soy proteins, pea proteins, caseinate, egg albumen, lyzozyme, gluten, rice protein, corn protein, potato protein, pea protein, skimmed milk proteins or any kind of globular and random coil proteins as well as combinations thereof.

The drying step can be carried out by any commonly known drying technique such as air drying, oven drying, ventilation, spray drying, vacuum drying, bed drying, microwave-vacuum drying, infrared radiation drying or combinations thereof. The drying temperature is between 50 to 120°C, preferably between 50 to 110°C, preferably between 60 to 100°C, preferably between 60 to 90°C.

Milling according to this invention is a process that breaks solid materials into smaller pieces by grinding, crushing, or cutting. Milling can be carried out by any commonly known milling techniques such as roll mill, hammer mill, chopper mill, ball mill, SAG mil, rod mil or combinations thereof.

Independently of the mixing sequence of the fiber, fat, and water a powdered fat-fiber can be obtained after drying. In case fiber and water is mixed first the viscosity of this mixture is higher due to the swelling of the fiber. Therefore adding melted fat to the fiber-water-suspension needs a longer mixing time or a higher mixing shear rate to obtain a homogenous fiber-fat-water mixture. In a preferred embodiment the fiber and melted fat is mixed first and water is added afterwards and further mixed. This process sequence has the advantage that the resulting fat-fiber-water-suspension ensures a better homogenous mixture in less time or lower mixing shear rate.

"Flow-ability" means flow properties on how easily a powder flows. Flow-ability (*ff_{c}*) is quantified as the ratio of consolidation stress σ₁ to unconfined yield strength σ*_{c}* according to "Schulze, D. (2006). Flow properties of powders and bulk solids. Braunschweig/Wolfenbuttel, Germany: University of Applied Sciences." In an embodiment flow-ability (*ff_{c}*) of the fat-fiber powder is at least 1.8 at 23°C, preferably between the range of 1.8 to 12 at 23°C, preferably between the range of 2 to 10 at 23°C, preferably between the range of 2 to 8 at 23°C, preferably between the range of 2.2 to 7 at 23°C.

### EXAMPLES

The invention is further described with reference to the following examples. It is to be appreciated that the examples do not in any way limit the invention.

### Example 1: Process of making fat-fiber structure

The general procedure for preparing fat powder of the invention is as follows:
- Completely melting the fat at temperatures between 50 and 100°C; preferably between 50 and 90°C; preferably between 60 and 90°C; more preferably between 60 and 85°C
- Adding and mixing fiber into melted fat
- Adding water with temperatures between 40 and 100°C (preferably between 50 and 100°C, preferably between 50 and 90°C, more preferably between 60 and 90°C) and further mix
- Drying at temperatures between 50 and 120°C and optionally milling

Fiber was mixed with melted fat in a Thermomix TM5 (Vorwerk &Co. KG). Mixing speed was set to speed 3. Mixing was performed for 5 minute, until a homogenous slurry was obtained. Subsequently, water at a temperature of 75°C was gradually added to the mixture while mixing parameters were maintained. Mixing was maintained for another 3 minute. The slurry was then spread onto a baking pan; slurry thickness was maintained between 5 and 10 mm, then dried in Rational Self Cooking Centre Electric Combination Oven SCC202E (Rational AG, Germany). Drying was carried out for 12 h at 70°C with 30% fan speed.

In order to evaluate and understand rate of hydration of fiber, experiments were performed in the laboratory under controlled conditions using a Rapid Viscosity Analyser (Newport Scientific, Australia). The method has been slightly modified as described within the reference "Instant Emulsions, Tim Foster et al, pages 413-422 in Dickinson, E. and M. E. Leser (2007). Food Colloids: Self-assembly and Material Science, Royal Society of Chemistry." Rate of hydration of fibers were measured by following the change in viscosity with time. 2.5g of fiber or non-fiber material was weighed and added to 22.5g of water. Measurement was carried out at 25°C under continuously steering at 160 rpm. The value for rate of hydration is determined by subtracting the final viscosity value from the initial viscosity value and then divided by the time, i.e. 10 min. When maximum (peak) viscosity value is observed earlier than 10 min (e.g. for the case of citrus fiber), the rate of hydration is determined by subtracting the maximum viscosity from the initial viscosity values and then divided by the time to reach this maximum viscosity value.

### Comp. Examples 2-3:

In case the fat is mixed with fiber alone (no added water), the presence of fiber does not improve flow-ability of fat powder (Comp. Ex. 3), shown by comparable flow-ability index to that of in pure fat powder (Comp. Ex. 2).

| | **Comp Ex. 2** | **Comp. Ex. 3** |
|---|---|---|
| Palm fat [wt%] | 100 | 80 |
| Solid fat content (SFC) of fat at 20°C | 62 - 85 | 62 - 85 |
| Fat SFC at 30°C | 48 - 60 | 48-60 |
| Fiber type | - | Carrot fiber |
| Rate of hydration of fiber [cP/min] | - | 106 |
| Fiber [wt%] | 0 | 20 |
| Water [in weight ratio of fiber to water] | No water added | No water added |
| Drying temp. [°C] | - | - |
| Flow-ability index | | |
| At 23°C | 1.6 | 1.6 |
| After exposure to 42°C for 12 h | Lump | Lump |
| Comments | | Fiber segregation (sedimentation); unevenly distributed in the fat powder |

### Examples 4-10: Different origin of fiber

Different kind of fibers have been tested according the process of example 1. Examples 7 to 10 show that the rate of hydration of fiber should be between 15 to 500 cP/min to obtain a flowable powder.

| | **Ex. 4** | **Ex. 5** | **Ex. 6** | **Comp. Ex. 7** |
|---|---|---|---|---|
| Palm fat [wt%] | 80 | 80 | 80 | 80 |
| Fat SFC at 20°C [wt%] | 62 - 85 | 62 - 85 | 62 - 85 | 62 - 85 |
| Fat SFC at 30°C [wt%] | 48 - 60 | 48 - 60 | 48 - 60 | 48 - 60 |
| Fiber origin | Carrot | Beet root | Pumpkin | Citrus |
| Rate of hydration of fiber [cP/min] | 106 | 104 | 253 | 5300 |
| Fiber [wt%] | 20 | 20 | 20 | 20 |
| Water [in weight ratio of fiber to water] | 1:9 | 1:9 | 1:9 | 1:9 |
| Drying temp. [°C] | 70 | 70 | 70 | 70 |
| Flow-ability index | | | | |
| At 23°C | 3.2 | 3.2 | 3.1 | 1.6 |
| After exposure to 42°C for 12 h | 3.0 | 3.0 | 3.0 | Lump |

| | **Comp. Ex. 8** | **Comp. Ex. 9** | **Comp. Ex. 10** |
|---|---|---|---|
| Palm fat [wt%] | 80 | 80 | 80 |
| Fat SFC at 20°C [wt%] | 62-85 | 62-85 | 62-85 |
| Fat SFC at 30°C [wt%] | 48-60 | 48 - 60 | 48 - 60 |
| Fiber origin | Apple | Oat | Pea |
| Rate of hydration of fiber [cP/min] | 2 | 8 | 0.3 |
| Fiber [wt%] | 20 | 20 | 20 |
| Water [in weight ratio of fiber to water] | 1:9 | 1:9 | 1:9 |
| Drying temp. [°C] | 70 | 70 | 70 |
| Flow-ability index | | | |
| At 23°C | 1.6 | 1.6 | 1.5 |
| After exposure to 42°C for 12 h | Lump | Lump | Lump |

### Comparative examples 11-12: Other non-fiber

| | **Comp Ex. 11** | **Comp. Ex. 12** |
|---|---|---|
| Palm fat [wt%] | 80 | 80 |
| Fat SFC at 20°C [wt%] | 62 - 85 | 62 - 85 |
| Fat SFC at 30°C [wt%] | 48 - 60 | 48 - 60 |
| Non-fiber solid | Native potato starch | Maltodextrin |
| Rate of hydration of non-fiber solid [cP/min] | 0.1 | 0.1 |
| Fiber [wt%] | 20 | 20 |
| Water [in weight ratio of fiber to water] | 1:9 | 1:9 |
| Drying temp. [°C] | 70 | 70 |
| Flow-ability index | | |
| At 23°C | 1.6 | 1.6 |
| After exposure to 42°C for 12 h | Lump | Lump |

### Examples 13-16: Different origin of fat

| | **Comp. Ex. 13** | **Comp. Ex. 14** | **Ex. 15** | **Ex. 16** |
|---|---|---|---|---|
| Fat origin | Beef fat | Single fractionated chicken fat | Beef fat | Single fractionated chicken fat |
| Fat SFC at 20°C [wt%] | 25-45 | 30 - 50 | 25-45 | 30 - 50 |
| Fat SFC at 30°C [wt%] | 17-30 | 20 - 35 | 17-30 | 20-35 |
| Fat amount [wt%] | 100 | 100 | 80 | 80 |
| Carrot fiber [wt%] | 0 | 0 | 20 | 20 |
| Water [in weight ratio of fiber to water] | 0:0 | 0:0 | 1:9 | 1:9 |
| Drying temp. [°C] | n.a. | n.a. | 70 | 70 |
| Flow-ability index | | | | |
| At 23°C | 1.1 | 1.1 | 2.8 | 2.8 |
| After exposure to 42°C for 12 h | Lump | Lump | 2.3 | 2.3 |

### Examples 17-20: Different particle size of fibers

Three different carrot fibers regarding the particle size have been tested. It is concluded that the tested particle size does not have an influence on the preparation of a fat powder.

| | **Ex. 17** | **Ex. 18** | **Ex. 19** | **Ex. 20** |
|---|---|---|---|---|
| Palm fat [wt%] | 80 | 80 | 80 | 80 |
| Fat SFC at 20°C [wt%] | 62 - 85 | 62 - 85 | 62 - 85 | 62 - 85 |
| Fat SFC at 30°C [wt%] | 48 - 60 | 48 - 60 | 48 - 60 | 48 - 60 |
| Carrot fiber Dv50 [µm] | 30 | 75 | 170 | 250 |
| Carrot fiber [wt%] | 2 | 2 | 2 | 2 |
| Water [in weight ratio of fiber to water] | 1:9 | 1:9 | 1:9 | 1:9 |
| Drying temp. [°C] | 70 | 70 | 70 | 70 |
| Flow-ability index | | | | |
| At 23°C | 3.2 | 3.1 | 3.1 | 3.0 |
| After exposure to 42°C for 12 h | 3.0 | 3.0 | 2.9 | 2.9 |

### Examples 21-26: Different fiber/fat ratios

| | **Ex. 21** | **Ex. 22** | **Ex. 23** |
|---|---|---|---|
| Palm fat [wt%] | 50 | 67 | 75 |
| Fat SFC at 20°C [wt%] | 62 - 85 | 62 - 85 | 62 - 85 |
| Fat SFC at 30°C [wt%] | 48 - 60 | 48 - 60 | 48 - 60 |
| Carrot fiber [wt%] | 50 | 33 | 25 |
| Water [in weight ratio of fiber to water] | 1:9 | 1:9 | 1:9 |
| Drying temp. [°C] | 70 | 70 | 70 |
| Flow-ability index | | | |
| At 23°C | 6.5 | 4.3 | 3.8 |
| After exposure to 42°C for 12 h | 6.2 | 4.2 | 3.5 |

| | **Ex. 24** | **Ex. 25** | **Comp. Ex 26** |
|---|---|---|---|
| Palm fat [wt%] | 85 | 90 | 95 |
| Fat SFC at 20°C [wt%] | 62 - 85 | 62 - 85 | 62 - 85 |
| Fat SFC at 30°C [wt%] | 48 - 60 | 48 - 60 | 48 - 60 |
| Carrot fiber [wt%] | 15 | 10 | 5 |
| Water [in weight ratio of fiber to water] | 1:9 | 1:9 | 1:9 |
| Drying temp. [°C] | 70 | 70 | 70 |
| Flow-ability index | | | |
| At 23°C | 3.0 | 2.5 | 1.7 |
| After exposure to 42°C for 12 h | 2.8 | 2.4 | Lump |

### Example 27: Exposure at very high temperature (130°C)

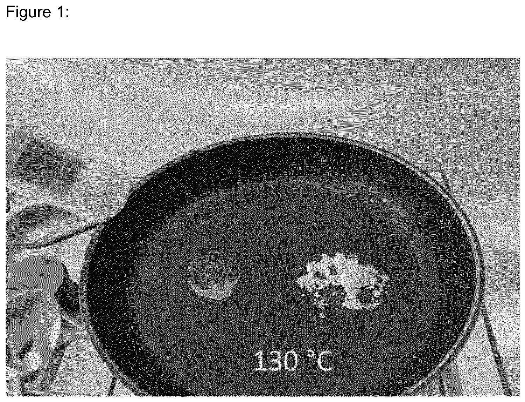

When standard palm fat powder (SFC at 20°C of 45-75 wt%) is exposed to temperatures of 130°C in frying pan, the fat melts and smears over the pan. When fat-fiber powder with 90 wt% fat and 10 wt% carrot fiber (example 4) is exposed to a temperature of 130°C in frying pan, it retains the powder structure and the fat does not smear out. See figure 1.

When the fat-fiber powder (e.g. example 4) is suspended in water at 60°C, the fat is released and so called fat eyes are visible on top.

## Claims

1. A process for the production of a fat-fiber powder comprising up to 93wt% of a fat and at least 7wt% of a fiber, the process comprising the steps of:
a) Melting fat;
b) Mixing fiber, melted fat, and water at a weight ratio of fiber to water between 1:2.5 and 1:30;
c) Drying the mixture of step b);
d) Optionally milling the fat-fiber powder after the drying step c);
wherein the fiber is **characterized by** having a rate of hydration between 15 to 500 cP/min and wherein the fat has a solid fat content (SFC) at 20°C of at least 12.1 wt% (by weight of total fat), wherein said rate of hydration is measured according to the method disclosed in example 1.

2. A process for the production of a fat-fiber powder as claimed in claim 1, wherein the fiber is a water insoluble dietary fiber.

3. A process for the production of a fat-fiber powder as claimed in any one of claims 1 to 2, wherein the fiber is selected from the group consisting of carrot fiber, beetroot fiber, pumpkin fiber or combinations thereof.

4. A process for the production of a fat-fiber powder as claimed in any one of claims 1 to 3, wherein the fat is selected from the group consisting of palm oil, palm stearin, hydrogenated palm oil, interesterified palm oil, coconut oil, cocoa butter, shea butter, fractionated shea butter, sal fat, illipe butter, mango (kernel) oil, kokum butter, beef fat (tallow), fractionated beef fat, port fat (lard), butter, milk fat, single and double fractionated chicken fat or combinations thereof.

5. A process for the production of a fat-fiber powder as claimed in any one of claims 1 to 4, wherein the fat-fiber powder comprising between 40 to 93 wt% of fat (by weight of total fat-fiber powder) and 7 to 60 wt% of a vegetable fiber (by weight of total fat-fiber powder).

6. A process for the preparation of fat-fiber powder as claimed in any one of claims 1 to 5, wherein the drying is done at a temperature between 50 to 120°C.

7. A process for the preparation of fat-fiber powder as claimed in any one of claims 1 to 6, wherein the drying is done by oven drying, air drying, vacuum drying, bed drying, microwave-vacuum drying, spray-drying, infrared radiation drying or combinations thereof.

8. A process for the preparation of fat-fiber powder as claimed in any one of claims 1 to 7, wherein the fiber and melted fat is mixed first and water is added afterwards and further mixed.

9. A process for the preparation of fat-fiber powder as claimed in any one of claims 1 to 8, wherein the water at a temperature range between 40 and 100°C is mixed.

10. A process for the preparation of fat-fiber powder as claimed in any one of claims 1 to 9, wherein the fat-fiber powder does not contain any added emulsifier or added protein or combinations thereof.

## Patentansprüche

1. Prozess für die Produktion eines Fett-Faser-Pulvers, umfassend zu bis zu 93 Gew.-% ein Fett und zu mindestens 7 Gew.-% eine Faser, der Prozess umfassend die Schritte:
a) Schmelzen von Fett;
b) Mischen von Fasern, geschmolzenem Fett und Wasser in einem Gewichtsverhältnis von Fasern zu Wasser zwischen 1:2,5 und 1:30;
c) Trocknen der Mischung von Schritt b);
d) Optional Mahlen des Fett-Faser-Pulvers nach dem Trocknungsschritt c);
wobei die Faser **dadurch gekennzeichnet ist, dass** sie eine Hydratationsrate zwischen 15 und 500 cP/min aufweist, und wobei das Fett einen Gehalt an gehärtetem Fett (SFC) bei 20 °C von mindestens 12,1 Gew.-% (bezogen auf das Gewicht des gesamten Fetts) aufweist, wobei die Hydratationsrate gemäß dem Verfahren gemessen wird, das in Beispiel 1 offenbart wird.

2. Prozess für die Produktion eines Fett-Faser-Pulvers nach Anspruch 1, wobei die Faser ein wasserunlöslicher Ballaststoff ist.

3. Prozess für die Produktion eines Fett-Faser-Pulvers nach einem der Ansprüche 1 bis 2, wobei die Faser aus der Gruppe ausgewählt ist, bestehend aus Karottenfaser, Rote-Bete-Faser, Kürbisfaser oder Kombinationen davon.

4. Prozess für die Produktion eines Fett-Faser-Pulvers nach einem der Ansprüche 1 bis 3, wobei das Fett aus der Gruppe ausgewählt ist, bestehend aus Palmöl, Palmstearin, gehärtetem Palmöl, umgeestertem Palmöl, Kokosnussöl, Kakaobutter, Sheabutter, fraktionierter Sheabutter, Salfett, Illipebutter, Mango(kern)öl, Kokumbutter, Rinderfett (Talg), fraktioniertem Rinderfett, Portfett (Schmalz), Butter, Milchfett, einfach und doppelt fraktioniertem Hühnerfett oder Kombinationen davon.

5. Prozess für die Produktion eines Fett-Faser-Pulvers nach einem der Ansprüche 1 bis 4, wobei das Fett-Faser-Pulver zu zwischen 40 und 93 Gew.-% Fett (bezogen auf das Gewicht des gesamten Fett-Faser-Pulvers) und zu 7 bis 60 Gew.-% eine pflanzliche Faser (bezogen auf das Gewicht des gesamten Fett-Faser-Pulvers) umfasst.

6. Verfahren für die Herstellung eines Fett-Faser-Pulvers nach einem der Ansprüche 1 bis 5, wobei das Trocknen bei einer Temperatur zwischen 50 bis 120 °C erfolgt.

7. Verfahren für die Herstellung eines Fett-Faser-Pulvers nach einem der Ansprüche 1 bis 6, wobei das Trocknen durch Ofentrocknung, Lufttrocknung, Vakuumtrocknung, Betttrocknung, Mikrowellenvakuumtrocknung, Sprühtrocknung, Infrarotstrahlungstrocknung oder Kombinationen davon erfolgt.

8. Prozess für die Herstellung von Fett-Faser-Pulver nach einem der Ansprüche 1 bis 7, wobei die Faser und das geschmolzene Fett zunächst gemischt werden und anschließend Wasser zugegeben und weiter gemischt wird.

9. Prozess für die Herstellung von Fett-Faser-Pulver nach einem der Ansprüche 1 bis 8, wobei das Wasser in einem Temperaturbereich zwischen 40 und 100° C gemischt wird.

10. Prozess für die Herstellung von Fett-Faser-Pulver nach einem der Ansprüche 1 bis 9, wobei das Fett-Faser-Pulver keinen zugegebenen Emulgator oder zugegebenes Protein oder Kombinationen davon enthält.

## Revendications

1. Procédé pour la production d'une poudre de matière grasse-fibre comprenant jusqu'à 93 % en poids d'une matière grasse et au moins 7 % en poids d'une fibre, le procédé comprenant les étapes consistant à :
a) Faire fondre la matière grasse ;
b) Mélanger fibre, matière grasse et eau dans un rapport en poids fibre/eau compris entre 1:2,5 et 1:30 ;
c) Faire sécher le mélange de l'étape b) ;
d) Broyer facultativement la poudre de matière grasse-fibre après l'étape de séchage c) ;
dans lequel la fibre est **caractérisée en ce qu'**elle présente un taux d'hydratation compris entre 15 et 500 cP/min et dans lequel la matière grasse a une teneur en matière grasse solide (SFC) à 20 °C d'au moins 12,1 % en poids (en poids de matière grasse totale), dans lequel ledit taux d'hydratation est mesuré selon la méthode décrite dans l'exemple 1.

2. Procédé pour la production d'une poudre de matière grasse-fibre selon la revendication 1, dans lequel la fibre est une fibre alimentaire insoluble dans l'eau.

3. Procédé pour la production d'une poudre de matière grasse-fibre selon l'une quelconque des revendications 1 à 2, dans lequel la fibre est choisie dans le groupe constitué de fibre de carotte, fibre de betterave, fibre de citrouille ou des combinaisons de celles-ci.

4. Procédé pour la production d'une poudre de matière grasse-fibre selon l'une quelconque des revendications 1 à 3, dans lequel la matière grasse est choisie dans le groupe constitué d'huile de palme, stéarine de palme, huile de palme hydrogénée, huile de palme interestérifiée, huile de noix de coco, beurre de cacao, beurre de karité, beurre de karité fractionné, graisse de sal, beurre d'illipé, huile de (noyau de) mangue, beurre de kokum, graisse de boeuf (suif), graisse de boeuf fractionnée, graisse de porc (saindoux), beurre, matière grasse du lait, graisse de poulet à simple et double fractionnement ou combinaisons de ceux-ci.

5. Procédé pour la production d'une poudre de matière grasse-fibre selon l'une quelconque des revendications 1 à 4, dans lequel la poudre de matière grasse-fibre comprend entre 40 et 93 % en poids de matière grasse (en poids de la poudre totale de matière grasse-fibre) et 7 à 60 % en poids d'une fibre végétale (en poids de la poudre totale de matière grasse-fibre).

6. Procédé pour la préparation de poudre de matière grasse-fibre selon l'une quelconque des revendications 1 à 5, dans lequel le séchage est réalisé à une température comprise entre 50 et 120 °C.

7. Procédé pour la préparation de poudre de matière grasse-fibre selon l'une quelconque des revendications 1 à 6, dans lequel le séchage est réalisé par séchage au four, séchage à l'air, séchage sous vide, séchage sur lit, séchage par micro-ondes sous vide, séchage par pulvérisation, séchage par rayonnement infrarouge ou combinaisons de ceux-ci.

8. Procédé pour la préparation de poudre de matière grasse-fibre selon l'une quelconque des revendications 1 à 7, dans lequel la fibre et la matière grasse fondue sont d'abord mélangées, puis de l'eau est ajoutée et mélangée à nouveau.

9. Procédé pour la préparation de poudre de matière grasse-fibre selon l'une quelconque des revendications 1 à 8, dans lequel l'eau est mélangée à une plage de température comprise entre 40 et 100 °C.

10. Procédé pour la préparation de poudre de matière grasse-fibre selon l'une quelconque des revendications 1 à 9, dans lequel la poudre de matière grasse-fibre ne contient aucun émulsifiant ajouté, ni aucune protéine ajoutée, ni aucune combinaison de ceux-ci.
